# EUROPÄISCHE PATENTANMELDUNG

(11) **EP 2 033 964 A2**
(43) Veröffentlichungstag der Anmeldung: **11.03.2009**
(21) Anmeldenummer: 08158934.3
(22) Anmeldetag: 25.06.2008
(51) Int. Cl.: C07F 9/38

(54) **Korrosionsinhibitor**

(30) Priorität: 25.08.2007 DE 102007040247
(71) Anmelder: Evonik Goldschmidt GmbH, 45127 Essen (DE)
(72) Erfinder: De Gans, Berend-Jan, 45478 Mülheim an der Ruhr (DE); Hänsel, Rene, 46282 Dorsten (DE)

(57) **Zusammenfassung**

Gegenstand der Erfindung sind Korrosionsinhibitoren der allgemeinen Formel (I) 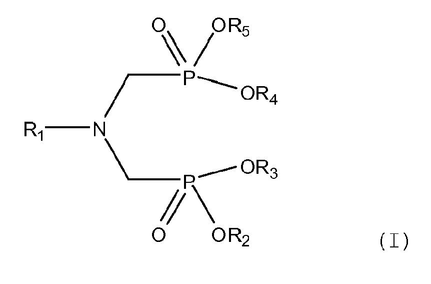 wobei
R₁ ein gesättigter, ungesättigter oder teilweise ungesättigter, linearer oder verzweigter Kohlenwasserstoffrest mit 5 bis 30 Kohlenstoffatomen ist und
OR₂ bis OR₅ gleich oder verschieden OH oder O⁻ M⁺ sind, wobei M⁺ ein organisches oder anorganisches Kation ist,
sowie deren Verwendung und Zusammensetzungen, die solche Korrosionsinhibitoren aufweisen.

## Beschreibung

Die Erfindung betrifft einen Korrosionsinhibitor, insbesondere einen Korrosionsinhibitor, der die Korrosion von Metallen wie beispielsweise Eisen, Aluminium, Zink, Magnesium oder deren Legierungen verhindert oder vermindert.

Der Schutz korrosionsgefährdeter Metalle wie beispielsweise Eisen, Zink, Aluminium, Magnesium oder deren Legierungen ist eine wichtige technische Aufgabe. Sie stellt sich insbesondere dann, wenn die Metallteile aufgrund ihres Bearbeitungszustandes oder aufgrund ihres Einsatzgebietes nicht durch einen permanenten Überzug, wie zum Beispiel einen Lack, vor Korrosion geschützt sind.

Typische Beispiele hierfür sind Metallteile während technischer Bearbeitung wie beispielsweise während zerspanender Bearbeitung. Um Korrosion während oder zwischen den einzelnen Bearbeitungsschritte zu verhindern beziehungsweise einzudämmen, werden die Metalloberflächen mit Korrosionsinhibitoren in Kontakt gebracht, die einen temporären Korrosionsschutz bilden. Dabei ist es häufig aus technischen Gründen erforderlich, dass die Korrosionsinhibitoren in wässriger Phase mit den Metalloberflächen in Kontakt gebracht werden können. Dies ist beispielsweise dann der Fall, wenn der Korrosionsinhibitor in Kühlkreisläufen eingesetzt werden soll. Es ist daher eine wünschenswerte Eigenschaft von Korrosionsinhibitoren, wasserlöslich oder zumindest wasserdispergierbar zu sein.

Die Auswahl eines Korrosionsinhibitors richtet sich nach dem Metall, welches vor Korrosion geschützt werden soll. Für Eisen und Stahl ist die Verwendung von Salzen, welche durch die Neutralisation einer Fettsäure, wie beispielsweise Ölsäure, mit einer äquivalenten Menge eines Alkanolamins, wie beispielsweise Monoethanolamin erhalten werden, im Stand der Technik lange bekannt und wird z.B. in US 2,614,980 erwähnt. Für Aluminium ist die Verwendung von Organophosphonaten als Korrosionsinhibitoren Stand der Technik. So beschreibt Zimmerer in US 3,351,558 die Verwendung von Alkylphosphonaten mit 12 bis 24 C-Atomen in der Alkylkette, und Alkylbenzolphosphonaten mit 9 bis 18 C-Atomen in der Alkylkette als Korrosionsinhibitoren für Aluminium in Reinigungsmitteln. Derartige Verbindungen lassen sich allerdings nicht kostengünstig herstellen, was in der Praxis dazu geführt hat, dass sie kaum eingesetzt werden.

Durch die Reaktion von (Alkyl)aminen mit Formaldehyd und Phosphonsäure in Anwesenheit eines sauren Katalysators lassen sich viele Organophosphonaten kostengünstig herstellen. Beispiele sind Amino-tris(methylenphosphonsäure) und Hexamethylenediamin-tetra(methylenphosphonsäure), die von der Firma 2schimmer & Schwarz Mohsdorf GmbH & Co KG als Cublen^{®} AP respective Cublen^{®} D5012 auf dem Markt angeboten werden. Solche Verbindungen werden eingesetzt zur Inhibierung der Ausfällung von Kalziumcarbonat und Kalziumsulfat in Kühlwassersystemen und Waschmitteln. Als Korrosionsinhibitoren für Aluminium sind solche Verbindungen aufgrund fehlender Wirkung kaum geeignet.

Mitchell beschreibt in US 3,723,347 die Anwendung von Bismethylenphosphonsäuren auf Basis der linearen α,ω-modifizierten Alkyldiaminen als Korrosionsinhibitoren für Aluminium, wobei Alkyldiamine mit 2 bis 8 C-Atomen besonders bevorzugt sind. Es ist allerdings zu erwarten, dass die korrosionsinhibierende Wirkung noch verbessert wird mit Zunahme der Anzahl von C-Atomen in der Alkylkette. Derartige Verbindungen lassen sich allerdings ebenfalls nicht kostengünstig herstellen und sind deshalb kaum verfügbar.

Hirozawa, Turcotte und Welch beschreiben in US 5,230,819 die Anwendung von Gemdiphosphonaten als Korrosionsinhibitoren für Aluminium. Diese Verbindungen schäumen allerdings sehr stark. Die Stabilität in hartem Wasser ist ebenfalls problematisch.

Hirozawa, Turcotte, Welch und Reynolds beschreiben in US 5,419,845 die Anwendung von perfluorierten Gemdiphosphonaten als Korrosionsinhibitoren für Aluminium. Die Anwendung von perfluorierten Verbindungen gerät allerdings aufgrund fehlender biologischer Abbaubarkeit zunehmend in Verruf, so dass mit großtechnischem Einsatz derartige Verbindungen nicht gerechnet werden kann. Außerdem lassen sich perfluorierte Verbindungen ebenfalls nicht kostengünstig herstellen.

Koch und Geke beschreiben in DE 199 59 588 Abmischungen aus Carbonsäuren, Carbonsäureamiden, Organophosphonsäuren und Aminverbindungen, allerdings in erster Linie als Korrosionsinhibitoren für eine Metallbehandlungsflüssigkeit für Eisen und Stahl mit einem pH-Wert im Bereich pH 5,5 bis 8,5.

Christensen und Gelazis beschreiben in US 4,406,811 Abmischungen die ebenfalls eine Kombination aus einer Carbonsäure und einer Organophosphonsäure enthalten. Die Organophosphonsäure dient allerdings allein dem Zweck des Inhibierens der Ausfällung von Kalziumcarbonat und Kalziumsulfat und nicht dem Korrosionsschutz.

Die Verwendung von Organophosphonsäuren als Schmierstoffe für wässrige Walzöle für Stahl wurde bereits in JP 09-048991 beschrieben. Einen Hinweis darauf, dass die Organophosphonsäuren als Korrosionsinhibitoren geeignet sein könnten, ist der Schrift nicht zu entnehmen.

Aufgabe der vorliegenden Erfindung war deshalb die Bereitstellung von alternativen Korrosionsinhibitoren, die vorzugsweise einen oder mehrere der Nachteile der im Stand der Technik bekannten Korrosionsinhibitoren nicht aufweisen und die kein umweltgefährdendes Fluor aufweisen und die für die Anwendung in funktionellen Flüssigkeiten geeignet sind.

Überraschenderweise würde nun gefunden dass Organophosphonsäuren der allgemeinen Formel (I) 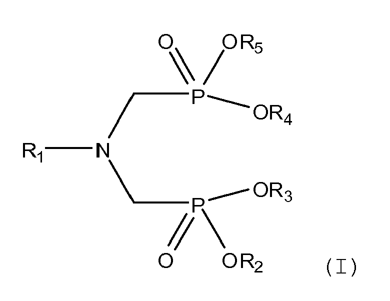 als Korrosionsinhibitoren, insbesondere für Aluminium, hervorragend geeignet sind.

Gegenstand der vorliegenden Erfindung sind deshalb Korrosionsinhibitoren der allgemeinen Formel (I), 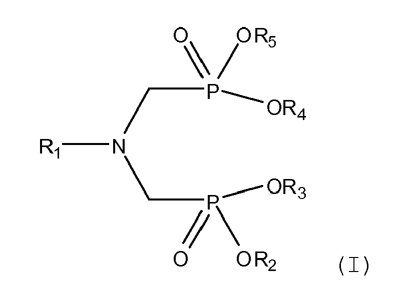 wobei
- R₁: ein gesättigter, ungesättigter oder teilweise ungesättigter, linearer oder verzweigter Kohlenwasserstoffrest mit 5 bis 30 Kohlenstoffatomen ist und
- OR₂ bis OR₅: gleich oder verschieden OH oder O⁻M⁺ sind, wobei M⁺ ein organisches oder anorganisches Kation ist, bzw. die Verwendung von Verbindungen der allgemeinen Formel (I) als Korrosionsinhibitor.

Ebenfalls Gegenstand der vorliegenden Erfindung ist die Verwendung von erfindungsgemäßen Korrosionsinhibitoren in funktionellen Flüssigkeiten die mit Aluminium, Aluminiumlegierungen, Zink, Zinklegierungen, Magnesium, Magnesiumlegierungen, Eisen, Stahl, galvanisiertem bzw. verzinktem Stahl oder legierte Stähle in Kontakt kommen.

Außerdem ist Gegenstand der vorliegenden Erfindung, eine vorzugsweise wässrige, korrosionsinhibierende Zusammensetzung für die Verwendung mit Eisen, Stahl, Aluminium, Magnesium, Zink oder dessen Legierungen oder Mischungen enthaltend
a) eine oder mehrere Carbonsäuren,
b) ein oder mehrere organische Amine und/oder Alkanolamine und
c) einen oder mehrere erfindungsgemäße Korrosionsinhibitoren.

Die erfindungsgemäßen Korrosionsinhibitoren haben den Vorteil, dass sie kein umweltgefährdendes Chlor aufweisen.

Die Flexibilität, die heutzutage von einem metallverarbeitenden Gewerbe abverlangt wird, hat dazu geführt, dass die gleichen Maschinen zur Bearbeitung von sowohl Eisen, Stahl als auch Aluminium und dessen Legierungen eingesetzt werden. Ein besonderer Vorteil des erfindungsgemäßen Korrosionsinhibitors besteht darin, dass er allein oder in Abmischung mit anderen Korrosionsinhibitoren auf allen genannten Metallen eine gute Schutzwirkung zeigt. Damit entfällt die Notwendigkeit den Korrosionsinhibitor beziehungsweise die funktionelle Flüssigkeit, die mit Korrosionsinhibitor additiviert wurde, gleichzeitig mit dem Metall auszutauschen. Außerdem lassen sich Metallteile, wie zum Beispiel von Maschinen, schützen die aus mehreren Metallsorten bestehen.

Die erfindungsgemäßen Korrosionsinhibitoren und deren Verwendung werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören.

Der erfindungsgemäße Korrosionsinhibitor der allgemeinen Formel (I), 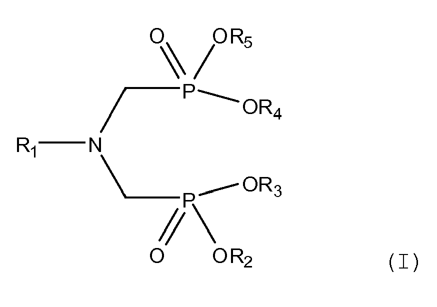 weist als Rest
- R₁: einen gesättigten, ungesättigten oder teilweise ungesättigten, linearen oder verzweigten Kohlenwasserstoffrest mit 5 bis 30, vorzugsweise 6 bis 24 Kohlenstoffatomen auf und die Reste
- OR₂ bis OR₅: sind gleich oder verschieden OH oder O⁻M⁺, wobei M⁺ ein organisches oder anorganisches Kation ist.

Vorzugsweise ist der Rest R₁ eine Alkylbenzolrest mit 0 bis 20 Kohlenstoffatomen in der Alkylkette. Besonderes bevorzugt sind Alkylbenzolreste mit einem gesättigten oder teilweise ungesättigten, linearen oder verzweigten Alkylrest mit 8 bis 20 Kohlenstoffatomen.

Die Korrosionsinhibitoren gemäß Formel I können durch die Reaktion von einem entsprechenden Alkylamin mit Formaldehyd und Phosphonsäure in der Anwesenheit eines sauren Katalysators hergestellt werden. Als saure Katalysatoren können z. B. organische oder anorganische Säuren, wie z. B. Salzsäure oder saure Feststoffe verwendet werden.

Bevorzugt sind die erfindungsgemäßen Korrosionsinhibitoren Gemische von Verbindungen der Formel I, bei denen die Reste R₁ unterschiedliche gesättigte oder ungesättigte Alkylreste mit 6 bis 24 Kohlenstoffatomen sind. Besonders bevorzugt sind die erfindungsgemäßen Korrosionsinhibitoren Gemische von Verbindungen der Formel I, bei denen die Reste R₁ gesättigte und/oder ungesättigte Alkylreste mit einem Modus (Hauptanteil) der Verteilung der Anzahl an Kohlenstoffatomen im Rest R₁ von 8 bis 22, vorzugsweise von 10 bis 20 und bevorzugt von 12 bis 18 sind. Solche Gemische können dadurch erhalten werden, dass bei der Herstellung sogenannte Fettamine als Rohstoffe eingesetzt werden. Der Namensgebung Fettamine ist bedingt durch die Herstellung der Fettamine auf Basis natürlicher Fette und Öle. Beispiele für solche Fette sind Kakaobutter, Kokosfett, Baumwollsaatöl, Erdnußöl, Haselnussöl, Leinöl, Distelöl, Sojaöl, Sonnenblumenöl, Traubenkernöl, Maiskeimöl, Mandelöl, Olivenöl, Palmöl, Rapsöl, Wallnussöl oder Weizenkeimöl. Vorzugsweise sind die erfindungsgemäßen Korrosionsinhibitoren Gemische von Verbindungen der Formel I, bei denen die Reste R₁ auf Fettaminen des Kokosfetts basieren. Besonders bevorzugt sind die erfindungsgemäßen Korrosionsinhibitoren Gemische von Verbindungen der Formel I, bei denen die Reste R₁ unterschiedliche gesättigte oder ungesättigte Alkylreste mit 6 bis 20 Kohlenstoffatomen sind, wobei das molare Verhältnis der Alkylreste von dem bei der Herstellung des eingesetzten Fettamins eingesetzten natürlichen Kokosfett abhängig ist.

Die erfindungsgemäßen Korrosionsinhibitoren weisen vorzugsweise ausschließlich Verbindungen der Formel I auf, bei denen nicht sämtliche Reste OR₂ bis OR₅ OH-Reste sind. Bevorzugt sind mehr als die Hälfte der Reste OR₂ bis OR₅, besonders bevorzugt alle Reste OR₂ bis OR₅ Reste O⁻M⁺. Bevorzugt sind die erfindungsgemäßen Korrosionsinhibitoren Verbindungen der Formel I, bei denen M⁺ ein Alkalimetall-, Ammonium- und/oder ein organisch substituiertes Ammoniumion ist. Als Alkalimetall bevorzugt sind Natrium und Kalium. Als organisch substituiertes Ammoniumion können die Verbindungen der Formel I Tetramethylammonium, Tetra-n-propylammonium, Tetra-n-Butylammonium, Monoethanolammonium, Diethanolammonium, Triethanolammonium, N,N-Dimethylethanolammonium, N,N-Diethylethanolammonium, N-Methyldiethanolammonium, N-Methylethanolammonium, Monoisopropanolammonium, Diisopropanolammonium, Triisopropanolammonium, N-Isopropylethanolammonium, 3-Dimethylaminopropylammonium, 2-Ammonium-2-Methylpropanol (AMP 75), 2-Ammonium-1-Butanol, 2-Ammonium-2-Methyl-1,3-Propandiol, Diglykolammonium, 2-Ammonium-2-Ethyl-1,3-Propandiol, Tris(hydroxymethyl)ammonium-methan, N,N-Diethylhydroxylammonium, 3-Ammoniumpropanol, Monomethylammonium, Dimethylammonium, Trimethylammonium, Monoethylammonium, Diethylammonium, Triethylammonium, Mono-n-Propylammonium, Di-n-Propylammonium, Tri-n-Propylammonium, Monoisopropylammonium, Diisopropyl-ammonium, Ethyldiisopropylammonium, Mono-n-Butylammonium, Di-n-Butylammonium, Tri-n-Butylammonium, Monocyclohexanammonium, Dicyclohexanammonium, Mono-2-Ethylhexylammonium, Bis-2-Ethylhexylammonium, Ethylendiammonium, Diethylentriammonium, Triethylentetraammonium, Tetraethylenpentaammonium, Pentaethylenhexaammonium, Hexaethylenheptaammonium, Morpholinium, N-Methylmorpholinium, N-Ethylmorpholinium, Ammoniumethylpiperazine, Diglykolammonium und/oder 2-(2-Ammoniumethyl)-Aminoethanol als M⁺ aufweisen. Vorzugsweise ist mindestens ein M⁺, bevorzugt sind alle M⁺ in den Verbindungen der Formel (I) Diglykolammoniumionen.

Besonders bevorzugte Korrosionsinhibitoren sind Kokosamin-bis(methylenphosphonsäure) oder deren Salze, vorzugsweise deren Ammonium- und/oder Diglykolammoniumsalze.

Die erfindungsgemäßen Korrosionsinhibitoren bzw. Verbindungen der Formel I können als Korrosionsinhibitoren in Konzentraten oder Zusammensetzungen zur Inhibierung von Korrosion verwendet werden.

Vorzugsweise können die erfindungsgemäßen Korrosionsinhibitoren in funktionellen Flüssigkeiten, bevorzugt wässrigen funktionellen Flüssigkeiten, die mit Metallen in Kontakt kommen, verwendet werden. Unter funktionellen Flüssigkeiten werden im Rahmen der vorliegenden Erfindung Flüssigkeiten verstanden, die mit Metallen in Kontakt kommen und dabei Funktionen wie z. B. das Abführen von Wärme und/oder Schmieren übernehmen. Solche funktionellen Flüssigkeiten sind insbesondere Bohr- und Schneidflüssigkeiten, Kühlflüssigkeiten und Kühlschmierstoffe. Besonders bevorzugte funktionelle Flüssigkeiten sind solche, die bei spanenden oder spangebenden Bearbeitungsprozessen verwendet werden.

Bevorzugt werden die erfindungsgemäßen Korrosionsinhibitoren in funktionellen Flüssigkeiten, die mit Aluminium oder Aluminiumlegierungen in Kontakt kommen, verwendet.

Die erfindungsgemäßen Korrosionsinhibitoren können aber auch in funktionellen Flüssigkeiten verwendet werden, die mit Zink, Magnesium, Eisen, Zinklegierungen, Magnesiumlegierungen oder Eisenlegierungen in Kontakt kommen. Im Fall von Stahl werden unter den funktionellen Flüssigkeiten vorzugsweise keine Kaltwalzöle verstanden. Im Rahmen der vorliegenden Erfindung sollen deshalb unter funktionellen Flüssigkeiten bevorzugt keine Walzöle für den Gebrauch mit Stahl und besonders bevorzugt keine Walzöle für den Gebrauch mit Metallen oder Legierungen verstanden werden.

Die funktionellen Flüssigkeiten können unterschiedlich zusammengesetzt sein. Sie können als Konzentrat oder als einsatzfertige Mischung vorliegen. Aus dem Konzentrat kann durch einfaches Hinzufügen der gewünschten Menge Wasser die einsatzfertige funktionelle Flüssigkeit erhalten werden.

Bevorzugte funktionelle Flüssigkeiten, insbesondere einsatzfertige funktionelle Flüssigkeiten enthalten Wasser und von 0,005 bis < 5 Gew.-% an erfindungsgemäßen Korrosionsinhibitoren.

Besonders bevorzugt sind die funktionellen Flüssigkeiten, oder Konzentrate davon, erfindungsgemäße, vorzugsweise wässrige, korrosionsinhibierende Zusammensetzungen für die Verwendung mit Eisen, Stahl, Aluminium, Magnesium oder Zink oder deren Legierungen oder Mischungen, vorzugsweise Aluminium oder Aluminiumlegierungen enthaltend
a) eine oder mehrere Carbonsäuren,
b) ein oder mehrere organische Amine und/oder Alkanolamine, insbesondere Alkanolamine,
c) zumindest einen erfindungsgemäßen Korrosionsinhibitor gemäß Formel I.

Es kann vorteilhaft sein, wenn die erfindungsgemäße Zusammensetzung neben den Komponenten a), b) und c) als weitere Komponente d) ein oder mehrere ethoxylierte oder nicht-ethoxylierte Carbonsäureamide enthält.

Bevorzugte funktionelle Flüssigkeiten, wie z. B. Kühlschmierstoffkonzentrate, werden gemeinhin als soluble oils (Mineralölanteil > 40 %) oder als semi synthetische Fluids bezeichnet (Mineralölanteil < 40 %). Der Mineralölgehalt kann ganz oder teilweise durch synthetische oder vegetabile Esteröle ersetzt sein. Andere Komponenten können z. B. ionische oder nichtionische Emulgatoren oder Mischungen von beiden sein.

Solche funktionellen Flüssigkeiten enthalten bevorzugt:
- Ölkomponenten, vorzugsweise von 15 bis 65 Massenteile,
- Emulgatoren, vorzugsweise von 15 bis 35 Massenteile,
- nicht erfindungsgemäße Korrosionsinhibitoren, vorzugsweise von 5 bis 25 Massenteile,
- Cosolvent, vorzugsweise von 1 bis 10 Massenteile,
- erfindungsgemäße korrosionsinhibierende Zusammensetzung, vorzugsweise von 5 bis 25 Massenteile,
- Entschäumer, vorzugsweise von 0,05 bis 1 Massenteile,
- biologisch aktive Komponenten, insbesondere Biozide oder Fungizide und
- ggf. Wasser.

Als Ölkomponenten können die funktionellen Flüssigkeiten z. B. naphthenisches Öl oder Paraffinöl enthalten.

Als Emulgatoren können z. B. nicht-ionische Emulgatoren, Tallölfettsäure oder Petroleum Sulfat enthalten sein.

Als nicht erfindungsgemäße Korrosionsinhibitoren können z. B. Alkanolamine oder Borsäureamine enthalten sein.

Als Cosolventien können z. B. Butydiglykol oder Polyglykolether enthalten sein.

Als Entschäumer können die im Stand der Technik verwendeten Entschäumer, insbesondere solche auf Basis von Polysiloxanen enthalten sein.

Als biologisch aktive Komponenten kann z. B. eine Borsäureamin-Mischung in der erfindungsgemäßen funktionellen Flüssigkeit vorhanden sein.

Zwei typische Formulierungen (Konzentrate) werden nachfolgend angegeben.

Soluble oil Formulierung:
45 Massen-% Naphtenisches Öl,
25,7 Massen-% Emulgator Paket (nicht-ionischer Emulgator, Tallölfettsäure, Petroleum Sulfonat),
15 Massen-% Alkanolamine,
4,2 Massen-% Butyldiglykol,
10 Massen-% erfindungsgemäße korrosionsinhibierende Zusammensetzung,
0,1 Massen-% Entschäumer.

Semi synthetische Formulierung:
20 Massen-% Paraffinöl,
10 Massen-% erfindungsgemäße korrosionsinhibierende Zusammensetzung,
10 Massen-% Polyglykolether,
20 Massen-% Borsäure Amin Mischung,
19 Massen-% Wasser,
11 Massen-% Tallölfettsäure.

Diese nur grundsätzlichen Formulierungen können noch andere Komponenten wie Biozide, Fungizide und Metalldeaktivatoren enthalten.

Die Konzentration der erfindungsgemäßen korrosionsinhibierenden Zusammensetzung beträgt im Konzentrat der funktionellen Flüssigkeit vorzugsweise von 5 bis 15 Massen-%. Die Konzentrate werden vorzugsweise mit Wasser soweit verdünnt, dass die Konzentration des Konzentrats in der gebrauchsfertigen Mischung maximal bis ca. 5 bis 10 Massen-% beträgt. Die Konzentration der korrosionsinhibierenden Zusammensetzung in der gebrauchsfertigen Mischung (funktionellen Flüssigkeit) beträgt bevorzugt von 0,1 bis 2 Massen-%, besonders bevorzugt zwischen 0,2 und 0,7 Massen-%.

Das Massen-Verhältnis von Komponente a), b) und ggf. d) zu Komponente c) beträgt in der erfindungsgemäßen Zusammensetzung vorzugsweise von 5 zu 1 bis 50 zu 1, vorzugsweise von 8 zu 1 bis 30 zu 1 und besonders bevorzugt von 10 zu 1 bis 20 zu 1.

Enthält die erfindungsgemäße Zusammensetzung die Komponente d), so weist es diese vorzugsweise mit einem Anteil von 2 bis 98 Gew.-%, bevorzugt 40 bis 80 Gew.-% bezogen auf die Summe der Komponenten a) bis d) auf.

Die Carbonsäuren der Komponente a) können z. B. ausgewählt sein aus ein- oder mehrbasischen, gesättigten oder ungesättigten, linearen oder verzweigten aliphatischen Carbonsäuren mit 5 bis 30 C-Atomen und aus Carbonsäuren mit in die Kohlenstoffkette eingeschobenen Heteroatomen, die zwischen 5 und 40 Atome in der Kohlenstoff-Heteroatomkette aufweisen. Beispiele geeigneter Carbonsäuren sind die unverzweigten gesättigten Carbonsäuren n-Dodecansäure, n-Tetradecansäure, n-Hexadecansäure sowie n-Oktadecansäure. Beispiel einer Dicarbonsäure ist die 1,12-Dodecandicarbonsäure. Bevorzugt sind die Carbonsäuren Gemische von ein- oder mehrbasischen, gesättigten oder ungesättigten, linearen oder verzweigten aliphatischen Carbonsäuren mit 5 bis 30 C-Atomen und aus Carbonsäuren mit in die Kohlenstoffkette eingeschobenen Heteroatomen, die zwischen 5 und 40 Atome in der Kohlenstoff-Heteroatomkette aufweisen. Bevorzugte Carbonsäuren (ggf. mit eingeschobenen Heteroatomen) sind solche, bei denen die gesättigten und/oder ungesättigten Alkylreste einen Modus (Hauptanteil) der Verteilung der Anzahl an Kohlenstoffatomen im Alkylrest von 5 bis 30, vorzugsweise 8 bis 24 und besonders bevorzugt von 10 bis 20 Kohlenstoffatomen aufweisen.
Als Carbonsäuren mit in die Kohlenstoffkette eingeschobenen Heteroatomen können z. B. Ethercarbonsäuren der allgemeinen Formel R-(O-C₂H₄)ₙ- OCH₂COOH, wobei R für einen linearen oder verzweigten, gesättigten oder ungesättigten Alkylrest mit 6 bis 24 C-Atomen steht und n eine Zahl im Bereich von 1 bis 12 darstellt, eingesetzt werden. Dabei können die Ethercarbonsäuren technische Gemische aus Molekülen mit unterschiedlichen Resten R und unterschiedlichen Werten für n sein. Ein Beispiel hierfür ist die technische Laurylethercarbonsäure, bei der R für ein Gemisch aus linearen, gesättigten Alkylgruppen mit 12 und 14 C-Atomen steht und n etwa 2,5 ist.

Besonders bevorzugt werden als Carbonsäuren (Komponente a)) Tallölfettsäure, Rübölfettsäure, Rizinusölfettsäure oder Ölsäure oder Gemische davon eingesetzt.

Als organisches Amin und/oder Alkanolamin (Komponente b)) können z. B. Monoethanolamin, Diethanolamin, Triethanolamin, N,N-Dimethylethanolamin, N,N-Diethylethanolamin, N-Methyldiethanolamin, N-Methylethanolamin, Monoisopropanolamin, Diisopropanolamin, Triisopropanolamin, N-Isopropylethanolamin, 3-Dimethylaminopropylamin, 2-Amino-2-Methylpropanol, 2-Amino-1-Butanol, 2-Amino-2-Methyl-1,3-Propandiol, Diglykolamin, 2-Amino-2-Ethyl-1,3-Propandiol, Tris(hydroxymethyl)aminomethan, N,N-Diethylhydroxylamin, 3-Aminopropanol, Monomethylamin, Dimethylamin, Trimethylamin, Monoethylamin, Diethylamin, Triethylamin, Mono-n-Propylamin, Di-n-Propylamin, Tri-n-Propylamin, Monoisopropylamin, Diisopropylamin, Ethyldiisopropylamin, Mono-n-Butylamin, Di-n-Butylamin, Tri-n-Butylamin, Monocyclohexanamin, Dicyclohexanamin, Mono-2-Ethylhexylamin, Bis-2-Ethylhexylamin, Ethylendiamin, Diethylentriamin, Triethylentetraamin, Tetraethylenpentaamin, Pentaethylenhexaamin, Hexaethylenheptaamin, Morpholine, N-Methylmorpholine, N-Ethylmorpholine, Aminoethylpiperazine, 2-(2-Aminoethyl)-Aminoethanol, vorzugsweise Monoethanolamin, Diethanolamin, Triethanolamin, Diglykolamin, Monoisopropanolamin, Diglykolamin oder 2-Amino-2-Methylpropanol eingesetzt werden. Bevorzugt wird Diglykolamin als organisches Amin eingesetzt. Die organischen Amine beziehungsweise Alkanolamine können die Korrosionsschutzwirkung erhöhen und haben bei geeigneter Auswahl zusätzlich eine Pufferwirkung, so dass sie dazu beitragen, den pH-Wert der Zusammensetzung in einem vorgegebenen Bereich zu halten.

Als Komponente c) wird vorzugsweise Kokosamin-bis-(methylenphosphonsäure) oder deren Salze, vorzugsweise dessen Ammoniumsalz und/oder Diglykolammoniumsalz eingesetzt.

Als Komponente d) werden vorzugsweise Carbonsäureamide von Carbonsäuren, ausgewählt aus ein- oder mehrbasischen, gesättigten oder ungesättigten, linearen oder verzweigten aliphatischen Carbonsäuren mit 5 bis 30 C-Atomen, eingesetzt. Als Komponente d) werden vorzugsweise ethoxylierte Carbonsäureamide eingesetzt. Die Amidierung kann vorzugweise stattfinden mit Monoethanolamin oder Diglykolamin. Der Ethoxylierungsgrad kann varieren zwischen 0 und 10.

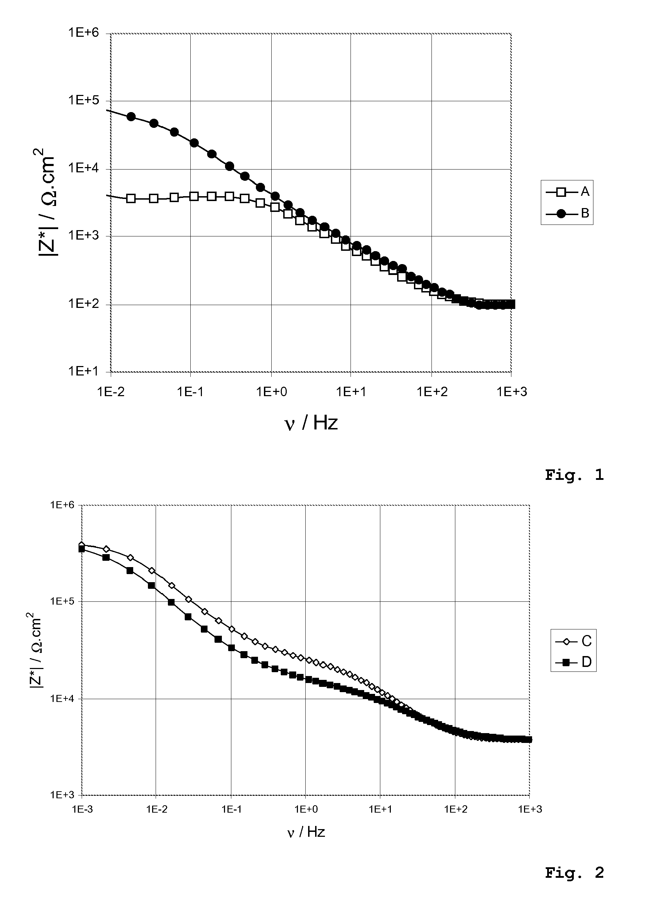

Die Erfindung wird anhand der Figuren 1 bis 4 näher erläutert, ohne das die Erfindung darauf beschränkt sein soll.

Fig. 1 zeigt die in Beispiel 1 gemessenen Impedanzspektren als Bode Diagramme. Auf der X-Achse ist die Frequenz ν logarithmisch dargestellt. Auf der Y-Achse ist der Absolutwert der Impedanz |Z*| logarithmisch dargestellt. Die unter Einsatz des Triethanolammoniumsalzes der Hexamethylen-tetra (methylenphosphonsäure) auf Aluminium 995 erhaltenen Messwerte sind mit einem "A" gekennzeichnet und quadratisch dargestellt. Die unter Einsatz des Triethanolammoniumsalzes der Kokosamin-bis(methylenphosphonsäure) erhaltenen Messwerte sind mit "B" gekennzeichnet und kreisförmig dargestellt.

Fig. 2 zeigt die in Beispiel 2 auf Baustahl St37 gemessenen Impedanzspektren, ebenfalls als Bode Diagramm. Die mit "C" gekennzeichneten und kreisförmig dargestellten Messwerte wurden bei der Verwendung einer wässrigen Lösung enthaltend 1,50 Gew.-% einer Mischung aus Tallölfettsäure, Monoethanolamin und das Ammoniumsalz der Kokosamin-bis(methylenphosphonsäure) als Korrosionsinhibitor erhalten. Die mit "D" gekennzeichneten und quadratisch dargestellten Messwerte wurden bei der Verwendung einer wässrigen Lösung enthaltend 1,50 Gew.-% einer Mischung aus Tallölfettsäure und Monoethanolamin als Korrosionsinhibitor erhalten.

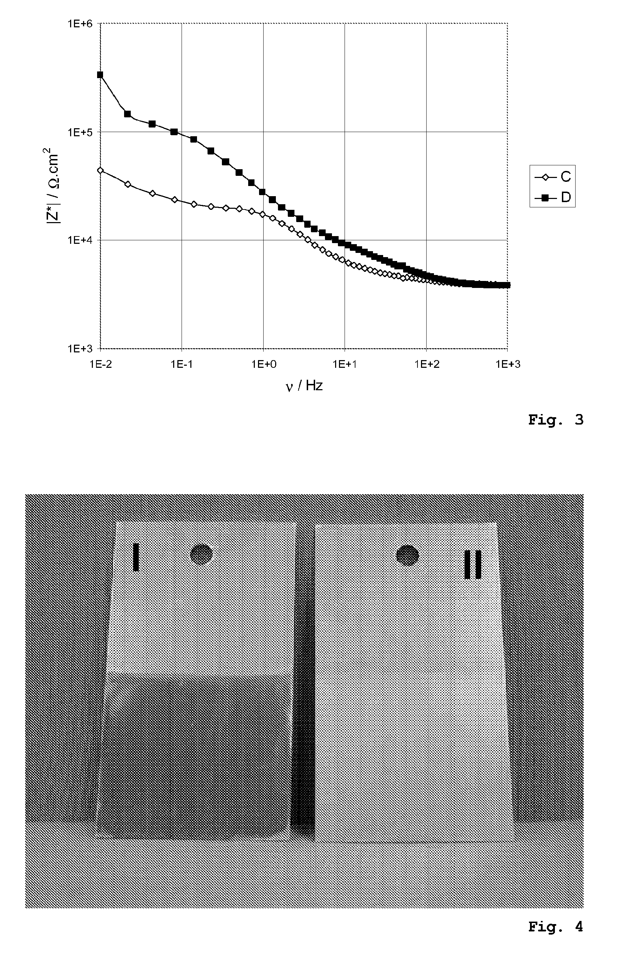

Fig. 3 zeigt die in Beispiel 2 auf Aluminium 7075 gemessenen Impedanzspektren. Die mit "C" gekennzeichneten und kreisförmig dargestellten Messwerte wurden bei der Verwendung einer wässrigen Lösung enthaltend 1,50 Gew.-% einer Mischung aus Tallölfettsäure, Monoethanolamin und das Ammoniumsalz der Kokosamin-bis(methylenphosphonsäure) als Korrosionsinhibitor erhalten. Die mit "D" gekennzeichneten und quadratisch dargestellten Messwerte wurden bei der Verwendung einer wässrigen Lösung enthaltend 1,50 Gew.-% einer Mischung aus Tallölfettsäure und Monoethanolamin als Korrosionsinhibitor erhalten.

Fig. 4 zeigt ein Bild von 2 Aluminium 7075 Testplatten nach 7 Tagen. Die Platte gekennzeichnet mit "I" wurde getestet in der Formulierung ohne erfindungsgemäßen Korrosionsinhibitor. Die Platte ist dort wo sie in Kontakt war mit der Formulierung stark korrodiert. Die mit "II" gekennzeichnete Platte wurde getestet in der Formulierung mit erfindungsgemäßen Korrosionsinhibitor. Nach 7 Tagen ist kaum Korrosion sichtbar.

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

### Beispiele:

### Impedanzmessungen:

Die Impedanzmessungen wurden mit einem Impedanzspektroskop IM6 der Firma Zahner (Kronach, Deutschland) unter Verwendung der Software Thales V3.10 (ebenfalls Zahner) zur Steuerung sowie Auswertung der Daten durchgeführt. Die gläserne Messzelle hatte ein Volumen von 1L und war unten mit einer Öffnung mit einem Durchmesser von 35 mm versehen. Die Messung erfolgt potentiostatisch mit einer 3-Elektroden Konfiguration. Als Referenzelektrode wurde eine Silber-Silberchlorid Elektrode der Firma Schott verwendet. Als Gegenelektrode dient ein Platindraht, als Arbeitselektrode entweder plattenförmiges Aluminium 995 (nach DIN 1712), Aluminium 7075 (nach DIN 1725), oder Baustahl St37 (nach DIN 17100). Die als Arbeitselektroden eingesetzten Plättchen wiesen eine Größe von 6 x 6 cm auf und wurden durch Anschleifen mittels eines ATM Saphire 320 Schleiftellers vorbehandelt. Während des Schleifens wurde mit Wasser gekühlt. Die Plättchen wurden sukzessive geschliffen mit Schleifpapieren der Körnung 320, 600 und 1200. Zwecks Reinigung von organischen Resten und Metallpartikeln wurden die Plättchen untergetaucht in einem Becherglas mit Isopropanol. Das Becherglas wurde dann während 10 Minuten in ein Ultraschallbad gestellt. Nach dem Entfernen der Plättchen aus dem Isopropanol wurden sie mit Pressluft getrocknet.

Lösungen, die Korrosionsinhibitor enthielten, wurden in einem abgeschlossenen Glas angesetzt und ebenfalls 10 Minuten in einem Ultraschallbad gestellt. Wenn nicht anders angegeben, wurde Leitungswasser (Essen, Deutschland) mit 7,8 ° DH verwendet.

Vor jeder Messung wurde 30 Minuten gewartet, damit sich im untersuchten System das Gleichgewicht einstellen konnte. Gemessen wurde mit einer Amplitude von 5 mV im Bereich von 0,01 bis 1.000 Hz (Aluminium), beziehungsweise von 0,001 bis 1.000 Hz (Stahl). Während der Messung wurde ständig Luft durch die Messzelle geleitet, um eine konstante Sauerstoffkonzentration zu gewährleisten. Die Messung wurde bei Raumtemperatur durchgeführt.

### Datenverarbeitung:

Die gemessenen Impedanzspektren wurden dargestellt als Bode Diagramme. Auf der X-Achse ist die Frequenz ν logarithmisch dargestellt. Auf der Y-Achse ist der Absolutwert der Impedanz |Z*| logarithmisch dargestellt.

Die Leistung der Korrosionsinhibitoren wurde nun wie folgt beurteilt. Aus der Differenz zwischen der Impedanz bei niedrigen und bei hohen Frequenzen - vorausgesetzt, die beiden haben ein Plateauwert erreicht - ergibt sich ein Widerstand, der als Polarisationswiderstand bezeichnet wird. Der Polarisationswiderstand ist umgekehrt proportional zum Korrosionsstrom. Je größer der Polarisationswiderstand, desto geringer ist die Korrosion. Der auf diese Weise ermittelte Polarisationswiderstand enthält im Falle von Aluminium einen Beitrag von dem Aluminiumoxidschicht auf der Aluminiumoberfläche. Oberhalb pH 9,0 ist dieser Beitrag jedoch vernachlässigbar.

### Beispiel 1:

Fig. 1 zeigt ein Bode Diagramm von wässrigen Lösungen enthaltend 1,50 Gew-% des Triethanolammoniumsalzes der Hexamethylen-tetra(methylenphosphonsäure) ("A"), respektive 1,50 Gew-% des Triethanolammoniumsalzes der Kokosamin-bis(methylenphosphonsäure) ("B"). Der pH-Wert dieser Lösungen wurde mit konzentriertem Ammoniak eingestellt auf pH 9,25. Die Impedanzspektren wurden gemessen mit Aluminium 995 als Arbeitselektrode.

Aus Fig. 1 geht hervor dass das Kokosamin-bis(methylenphosphonsäure)salz auf Aluminium eine vielfach bessere Schutzwirkung zeigt als das Hexamethylen-tetra(methylenphosphonsäure)salz. Auf Basis des Spektrums von Kokosaminbis (methylenphosphonsäure) salz lässt sich ein Polarisationswiderstand von 9 × 10⁵ Ω.cm² abschätzen. Für das Hexamethylen-tetra(methylenphosphonsäure)salz findet man 5 × 10⁴ Ω.cm², nur ein zwanzigstel dessen was mit dem Kokosamin-bis(methylenphosphonsäure)salz erreicht wurde.

### Beispiel 2:

Es wurde eine wässrige Lösung enthaltend 1,50 Gew-% einer Mischung aus den folgenden Substanzen: 76 Massenteile Tallölfettsäure, 19 Teile Monoethanolamin, und 5 Teile Ammoniumsalz der Kokosamin-bis(methylenphosphonsäure) angesetzt ("C"). Dazu wurde eine wässrige Lösung enthaltend 1,50 Gew.-% einer Mischung aus 80 Massenteilen Tallölfettsäure und 20 Teilen Monoethanolamin angesetzt ("D"). Der pH-Wert dieser Lösungen wurde mit Monoethanolamin eingestellt auf einen pH-Wert von 9,0. Die Impedanzspektren wurden sowohl auf Aluminium 7075 als auch auf Baustahl St37 gemessen.

Wie aus den Bode-Diagrammen in den Figuren 2 und 3 hervorgeht, ist die Schutzwirkung auf Stahl für beide Abmischungen nahezu identisch. Die Spektren - egal in welcher Darstellung - sind fast deckungsgleich. Große Unterschiede zeigen aber die Spektren auf Aluminium 7075. |Z*| von der Mischung aus Tallölfettsäure und Monoethanolamin ("D") zeigt einen Anstieg zwischen 10 und 1 Hz. Dieser Anstieg ist vermutlich auf einen Rest Aluminiumoxyd zurück zu führen, das bei niedrigeren pH-Werten für eine Passivierung der Oberfläche sorgt. Die Zugabe von Ammoniumsalz der Kokosamin-bis(methylenphosphonsäure) sorgt für einen starken Anstieg von |Z*| im Frequenzbereich unterhalb 1 Hz. Dies bedeutet, dass das Ammoniumsalz der Kokosamin-bis(methylenphosphonsäure) auch in geringer Konzentration eine vielfach bessere Schutzwirkung auf Aluminium hervorbringt als die in Mischung D vorhandenen Komponenten.

### Beispiel 3: Eintauchtest

Die Eintauchtests wurden mit plattenförmigem Aluminium 7075 bei Raumtemperatur in geschlossene Schraubdeckelgläser durchgeführt. Die Platten wurden zunächst mit Schleifpapier der Körnung 400 per Hand nass geschliffen. Anschließend wurden die Platten bis zur Hälfte in Flüssigkeit eingetaucht. Die folgende Formulierung (Formulierung II) wurde verwendet (Angaben in Massen-Teilen) :

| | |
|---|---|
| 45,0 | Teile Naphtenisches Öl (Nynast 25T22), |
| 17,5 | Teile Oleyl-/Cetylethoxylat (Emulsogen M), |
| 8,2 | Teile Tallölfettsäure, |
| 15,0 | Teile Triethanolamin, |
| 4,2 | Teile Butyldiglykol, |
| 10,0 | Teile erfindungsgemäße, korrosionsinhibierende Zusammensetzung bestehend aus 47,5 Gew.-% Ölsäure, 47,5 Gew.-% Mo- noethanolamin und 5 Gew.-% an erfindungsgemäßem Korrosionsinhibitor [Ammoniumsalz der Kokosamin-bis(methylenphosphonsäure)], |
| 0,1 | Teile Entschäumer (Tego Antifoam 793). |

Die gleiche Formulierung, allerdings ohne erfindungsgemäßem Korrosionsinhibitor (es wurden 10 Teile einer Zusammensetzung eingesetzt, die aus 50 Gew.-% Ölsäure und 50 Gew.-% Monoethanolamin besteht), wurde als Vergleich ebenfalls getestet (Formulierung I).

Fig. 4 zeigt ein Bild der 2 Testplatten nach 7 Tagen. Während an der mit "I" gekennzeichneten Platte, die in eine Formulierung ohne Korrosionsinhibitor getaucht wurde, starke Korrosion zu beobachten war, waren an der mit "II" gekennzeichneten Platte, die in die Formulierung mit dem erfindungsgemäßen Korrosionsinhibitor getaucht wurde, kaum Spuren von Korrosion sichtbar.

## Patentansprüche

1. Korrosionsinhibitor der allgemeinen Formel (I), 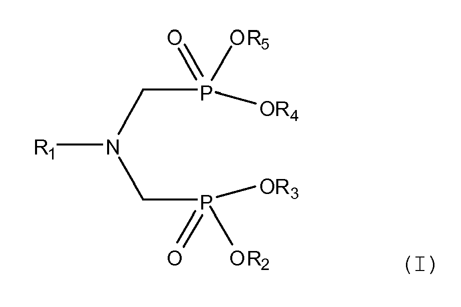 wobei
R₁ ein gesättigter, ungesättigter oder teilweise ungesättigter, linearer oder verzweigter Kohlenwasserstoffrest mit 5 bis 30 Kohlenstoffatomen ist und
OR₂ bis OR₅ gleich oder verschieden OH oder O⁻ M⁺ sind, wobei M⁺ ein organisches oder anorganisches Kation ist.

2. Korrosionsinhibitor nach Anspruch 1, **dadurch gekennzeichnet, dass** der Rest R₁ ein Alkylbenzolrest mit 0 bis 20 Kohlenstoffatomen in der Alkylkette oder ein gesättigter oder teilweise ungesättigter, linearer oder verzweigter Alkylrest mit 8 bis 20 Kohlenstoffatomen ist.

3. Korrosionsinhibitor nach Anspruch 1 oder 2, **dadurch gekennzeichnet, dass** M⁺ ein Alkalimetall-, Ammonium- oder organisch substituiertes Ammoniumion ist.

4. Korrosionsinhibitor nach zumindest einem der Ansprüche 1 bis 3, **dadurch gekennzeichnet, dass** M⁺ ein Tetramethylammonium, Tetra-n-propylammonium, Tetra-n-Butylammonium, Monoethanolammonium, Diethanolammonium, Triethanolammonium, N,N-Dimethylethanolammonium, N,N-Diethylethanolammonium, N-Methyldiethanolammonium, N-Methylethanolammonium, Monoisopropanolammonium, Diisopropanolammonium, Triisopropanolammonium, N-Isopropylethanolammonium, 3-Dimethylaminopropylammonium, 2-Ammonium-2-Methylpropanol, 2-Ammonium-1-Butanol, 2-Ammonium-2-Methyl-1,3-Propandiol, Diglykolammonium, 2-Ammonium-2-Ethyl-1,3-Propandiol, Tris(hydroxymethyl)-ammonium-methan, N,N-Diethylhydroxylammonium, 3-Ammoniumpropanol, Monomethylammonium, Dimethylammonium, Trimethylammonium, Monoethylammonium, Diethylammonium, Triethylammonium, Mono-n-Propylammonium, Di-n-Propylammonium, Tri-n-Propylammonium, Monoisopropylammonium, Diisopropyl-ammonium, Ethyldiisopropylammonium, Mono-n-Butylammonium, Di-n-Butylammonium, Tri-n-Butylammonium, Monocyclohexanammonium, Dicyclohexanammonium, Mono-2-Ethylhexylammonium, Bis-2-Ethylhexylammonium, Ethylendiammonium, Diethylentriammonium, Triethylentetraammonium, Tetraethylenpentaammonium, Pentaethylenhexaammonium, Hexaethylenheptaammonium, Morpholinium, N-Methylmorpholinium, N-Ethylmorpholinium, Ammoniumethylpiperazinion, Diglykolammonium und/oder 2-(2-Ammoniumethyl)-Aminoethanol Ion ist.

5. Verwendung eines Korrosionsinhibitors gemäß einem der Ansprüche 1 bis 4, in funktionellen Flüssigkeiten die mit Aluminium oder Aluminiumlegierungen in Kontakt kommen.

6. Verwendung eines Korrosionsinhibitors gemäß einem der Ansprüche 1 bis 4, in funktionellen Flüssigkeiten die mit Zink, Zinklegierungen, Magnesium, Magnesiumlegierungen, Eisen, Stahl, galvanisiertem oder verzinktem Stahl oder legierten Stählen in Kontakt kommen.

7. Korrosionsinhibierende Zusammensetzung für die Verwendung mit Eisen, Stahl, Aluminium, Magnesium oder Zink oder deren Legierungen oder Mischungen enthaltend
a) eine oder mehrere Carbonsäuren,
b) ein oder mehrere organische Amine und/oder Alkanolamine und
c) eine oder mehrere Verbindungen gemäß einem der Ansprüche 1 bis 4.

8. Zusammensetzung gemäß Anspruch 7, **dadurch gekennzeichnet, dass** sie als Komponente
d) ein oder mehrere ethoxylierte oder nicht ethoxylierte Carbonsäureamide enthält.

9. Funktionelle Flüssigkeit enthaltend Wasser und von 0,005 bis < 5 Gew.-% eines oder mehrere Korrosionsinhibitoren gemäß einem der Ansprüche 1 bis 4.
